Europäisches Patentamt

European Patent Office

Office européen des brevets

(19)

(11) **EP 0 931 271 B1**

(12) **FASCICULE DE BREVET EUROPEEN**

(45) Date de publication et mention
de la délivrance du brevet:
**06.08.2003 Bulletin 2003/32**

(21) Numéro de dépôt: **97909384.6**

(22) Date de dépôt: **10.10.1997**

(51) Int Cl.7: **G01T 1/164**, H04N 5/30

(86) Numéro de dépôt international:
**PCT/FR97/01810**

(87) Numéro de publication internationale:
**WO 98/016851 (23.04.1998 Gazette 1998/16)**

(54) **DISPOSITIF ET PROCEDE DE COLLECTION ET DE CODAGE DE SIGNAUX ISSUS DE PHOTODETECTEURS**

VORRICHTUNG UND VERFAHREN ZUM SAMMELN UND KODIEREN VON SIGNALEN VON PHOTODETEKTOREN

DEVICE AND METHOD FOR COLLECTING AND ENCODING SIGNALS COMING FROM PHOTODETECTORS

(84) Etats contractants désignés:
**DE GB IT NL**

(30) Priorité: **14.10.1996 FR 9612495**

(43) Date de publication de la demande:
**28.07.1999 Bulletin 1999/30**

(73) Titulaire: **COMMISSARIAT A L'ENERGIE ATOMIQUE**
**75015 Paris (FR)**

(72) Inventeurs:
 • **TOURNIER, Edmond**
   **F-38000 Grenoble (FR)**
 • **JANIN, Claude**
   **F-38000 Grenoble (FR)**
 • **MESTAIS, Corinne**
   **F-38660 La Terrasse (FR)**

(74) Mandataire: **Audier, Philippe André et al**
**Brevalex,**
**3, rue du Docteur Lancereaux**
**75008 Paris (FR)**

(56) Documents cités:
**EP-A- 0 277 391**          **EP-A- 0 470 909**
**WO-A-93/15420**          **US-A- 5 393 982**

• **PATENT ABSTRACTS OF JAPAN vol. 008, no. 023 (P-251), 31 janvier 1984 & JP 58 179323 A (CHINO WORKS LTD), 20 octobre 1983,**
• **MANKOFF D A ET AL: "THE HIGH COUNT RATE PERFORMANCE OF A TWO-DIMENSIONALLY POSITION-SENSITIVE DETECTOR FOR POSITRON EMISSION TOMOGRAPHY" PHYSICS IN MEDICINE AND BIOLOGY, vol. 34, no. 4, avril 1989, pages 437-456, XP000005971**

## Description

Domaine technique

La présente invention concerne un dispositif et un procédé de collection, de codage et de traitement de signaux issus de photodétecteurs.

L'invention s'applique en particulier à la collection et au codage des signaux fournis par des photomultiplicateurs équipant des gamma-caméras. On entend par gamma-caméra une caméra sensible au rayonnement gamma ($\gamma$). De telles caméras sont utilisées notamment à des fins d'imagerie médicale.

Etat de la technique antérieure

A l'heure actuelle, la plupart des gamma-caméras utilisées en médecine nucléaire sont des caméras fonctionnant selon le principe des caméras de type Anger. On peut se reporter à ce sujet au document (1) dont la référence est indiquée à la fin de la présente description.

Les gamma-caméras permettent en particulier de visualiser la répartition, dans un organe, de molécules marquées par un isotope radioactif préalablement injecté au patient.

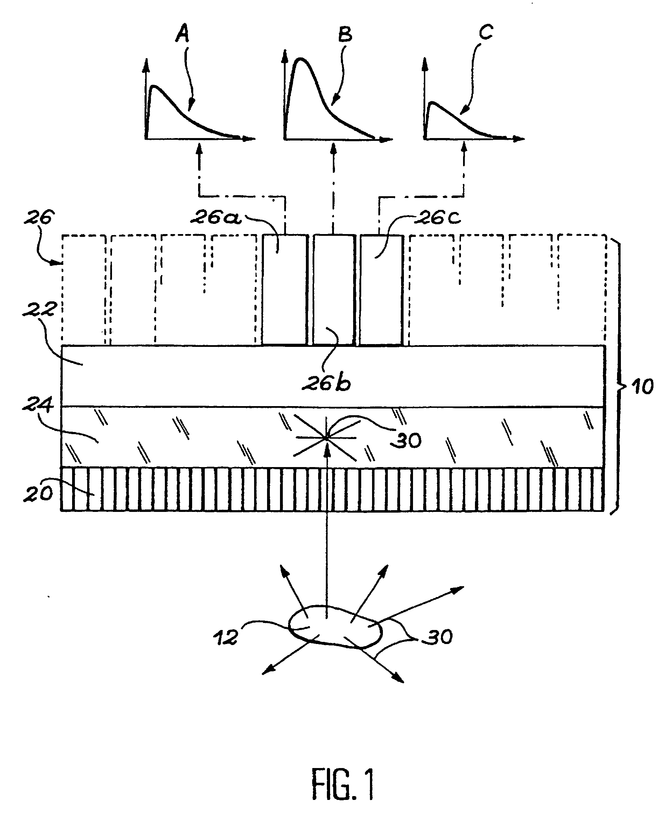

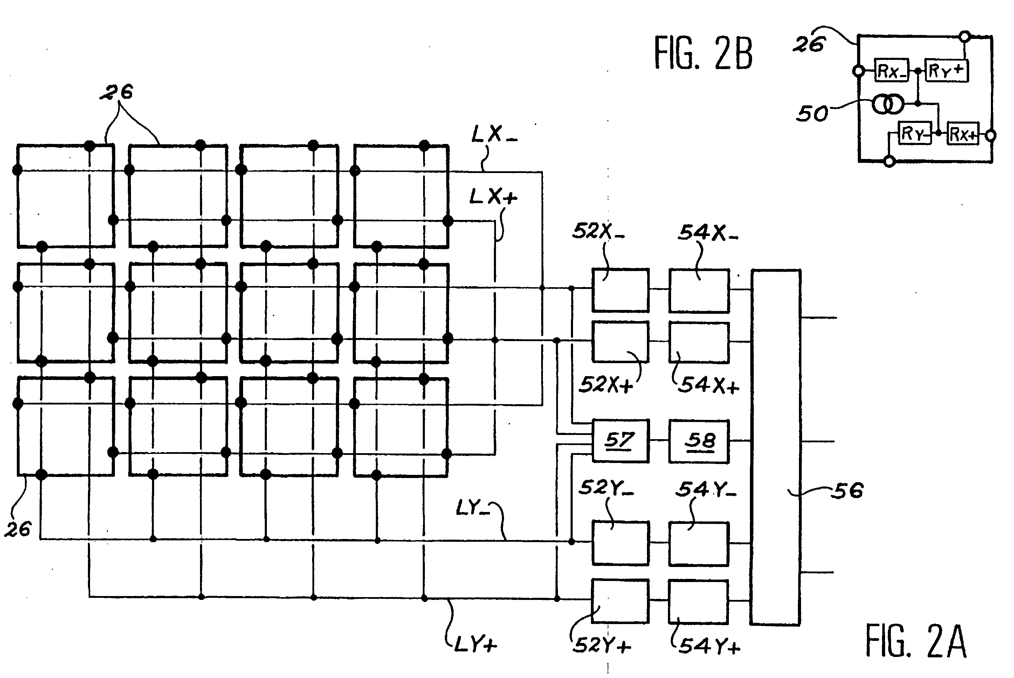

La structure et le fonctionnement d'une gamma-caméra connue sont exposés et résumés ci-après en référence aux figures 1, 2A et 2B annexées.

La figure 1 montre une tête de détection 10 d'une gamma-caméra disposée en face d'un organe 12 contenant des molécules marquées par un isotope radioactif.

La tête de détection 10 comporte un collimateur 20, un cristal scintillateur 24, un guide de lumière 22 et une pluralité de tubes photomultiplicateurs 26 juxtaposés de façon à couvrir une face du guide de lumière 22, opposée au cristal scintillateur 24. Le scintillateur est, par exemple, un cristal de NaI(T$\ell$).

Le collimateur 20 a pour fonction de sélectionner parmi tous les rayonnements gamma 30 émis par l'organe 12 ceux qui atteignent la tête de détection sensiblement sous incidence normale. Le caractère sélectif du collimateur permet d'augmenter la résolution et la netteté de l'image produite. Cependant, l'augmentation de la résolution se fait au détriment de la sensibilité. A titre d'exemple, pour environ 10000 photons $\gamma$ émis par l'organe 12, un seul photon est effectivement détecté.

Les photons $\gamma$ ayant traversé le collimateur atteignent le cristal scintillateur 24 où quasiment chaque photon $\gamma$ est converti en une pluralité de photons lumineux. Dans la suite du texte on désigne par événement chaque interaction d'un photon gamma avec le cristal, provoquant une scintillation.

Les photomultiplicateurs 26 sont conçus pour émettre une impulsion électrique proportionnelle au nombre de photons lumineux reçus du scintillateur pour chaque événement.

Pour qu'un événement de scintillation puisse être localisé plus précisément, les photomultiplicateurs 26 ne sont pas directement accolés au cristal scintillateur 24 mais sont séparés de ce dernier par le guide de lumière 22.

Les photomultiplicateurs émettent un signal dont l'amplitude est proportionnelle à la quantité totale de lumière produite dans le scintillateur par un rayonnement gamma, c'est-à-dire proportionnelle à son énergie. Toutefois, le signal individuel de chaque photomultiplicateur dépend aussi de la distance qui le sépare du point d'interaction 30 du rayonnement gamma avec la matière du scintillateur. En effet, chaque photomultiplicateur délivre une impulsion de courant proportionnelle au flux lumineux qu'il a reçu. Dans l'exemple de la figure 1, des petits graphiques A, B, C montrent que des photomultiplicateurs 26a, 26b et 26c situés à différentes distances d'un point d'interaction 30 délivrent des signaux avec des amplitudes différentes.

La position du point d'interaction 30 d'un photon gamma est calculée dans la gamma-caméra à partir des signaux provenant de l'ensemble des photomultiplicateurs en effectuant une pondération barycentrique des contributions de chaque photomultiplicateur.

Le principe de la pondération barycentrique tel qu'il est mis en oeuvre dans les caméras de type Anger apparaît plus clairement en se reportant aux figures 2A et 2B annexées.

La figure 2A montre le câblage électrique d'une tête de détection 10 d'une gamma-caméra, qui relie cette caméra à une unité numérique de formation d'une image. La tête de détection comporte une pluralité de photomultiplicateurs 26.

Comme le montre la figure 2B, chaque photomultiplicateur 26 de la tête de détection est équipé de quatre résistances notées $RX^-$, $RX^+$, $RY^-$ et $RY^+$. Les valeurs de ces résistances sont propres à chaque photomultiplicateur et dépendent de la position du photomultiplicateur dans la tête de détection 10.

Les résistances $RX^-$, $RX^+$, $RY^-$ et $RY^+$ de chaque photomultiplicateur sont reliées à la sortie 50 dudit photomultiplicateur, représentée sur la figure 2B avec un symbole de générateur de courant. Elles sont d'autre part respectivement reliées à des lignes collectrices communes notées $LX^-$, $LX^+$, $LY^-$, $LY^+$, sur la figure 2A.

Les lignes $LX^-$, $LX^+$, $LY^-$ et $LY^+$ sont à leur tour reliées respectivement à des intégrateurs analogiques $52X^-$, $52X^+$, $52Y^-$, $52Y^+$, et, par l'intermédiaire de ceux-ci à des convertisseurs analogiques/numériques $54X^-$, $54X^+$, $54Y^-$, $54Y^+$. La sortie des convertisseurs $54X^-$, $54X^+$, $54Y^-$, $54Y^+$ est dirigée vers un opérateur numérique 56. Les lignes $LX^-$, $LX^+$, $LY^-$, $LY^+$ sont par ailleurs reliées à une voie commune, dite voie énergie. Cette voie comporte également un intégrateur 57 et un convertisseur analogique/numérique 58 et sa sortie est aussi dirigé vers l'opérateur 56.

Grâce au dispositif de la figure 2, on calcule la position de l'interaction selon les équations suivantes :

$$X = \frac{X^+ - X^-}{X^+ + X^-}$$

*et*

$$Y = \frac{Y^+ - Y^-}{Y^+ + Y^-}$$

dans lesquelles X et Y indiquent les coordonnées selon deux directions orthogonales de la position de l'inter-action sur le cristal et dans lesquelles $X^+$, $X^-$, $Y^+$, $Y^-$ indiquent respectivement les signaux pondérés délivrés par les intégrateurs $52X^+$, $52X^-$, $52Y^+$, $52Y^-$.

Les valeurs de X et Y de même que l'énergie totale E du rayon gamma ayant interagi avec le cristal sont établies par l'opérateur numérique 56. Ces valeurs sont utilisées ensuite pour la construction d'une image.

On peut se reporter à ce sujet aux documents (2), (3) et (4) dont la référence est indiquée à la fin de la présente description.

Le calcul de la position de l'interaction est entaché d'une incertitude liée aux fluctuations statistiques de Poisson du nombre de photons lumineux et du nombre de photoélectrons produits pour chaque événement, c'est-à-dire pour chaque photon gamma détecté. L'écart type de la fluctuation est d'autant plus faible que le nombre de photons ou de photoélectrons est élevé. En raison de ce phénomène, il convient de collecter la lumière le plus soigneusement possible. La résolution spatiale intrinsèque de la caméra est caractérisée par la largeur à mi-hauteur de la distribution des positions calculées pour une même source ponctuelle collimatée posée sur le cristal scintillateur.

Pour des rayons gamma d'une énergie de 140 keV, la résolution intrinsèque est généralement de l'ordre de 3 à 4 mm.

L'énergie d'un photon gamma détecté est calculée en faisant la somme des contributions de tous les photomultiplicateurs ayant reçu de la lumière. Elle est aussi entachée d'une fluctuation statistique. La résolution en énergie de la caméra est caractérisée par le rapport de la largeur à mi-hauteur de la distribution des énergies calculées à la valeur moyenne de la distribution, pour une même source.

La résolution en énergie est généralement de l'ordre de 9 à 11% pour des rayons gamma d'une énergie de 140 keV.

Finalement, une gamma-caméra de type Anger présente l'avantage de permettre de calculer en temps réel le barycentre des signaux des photomultiplicateurs avec des moyens très simples.

En effet, le système décrit précédemment comporte un nombre limité de composants. De plus, les résistances utilisées pour injecter le signal des photomultiplicateurs dans les lignes collectrices sont très peu coûteuses.

Une telle caméra présente cependant aussi un désavantage majeur qui est un taux de comptage réduit. On entend par taux de comptage le nombre d'événements, c'est-à-dire d'interactions entre un photon γ et le scintillateur, que la caméra est capable de traiter par unité de temps.

La limitation du taux de comptage provient notamment du fait que la caméra est incapable de traiter deux événements ayant lieu sensiblement simultanément en des points distincts du cristal scintillateur.

En effet, des événements simultanés mais géométriquement distincts donnent naissance à des signaux électriques qui s'empilent dans les lignes collectrices $LX^-$, $LX^+$, $LY^-$ et $LY^+$ et qui ne peuvent plus être distingués. Ces événements sont aussi "perdus" pour la formation d'une image. Le document (6) dont la référence est indiquée à la fin de la présente description décrit une méthode de déconvolution des impulsions empilées afin de les séparer et d'améliorer le taux de comptage.

La limitation du taux de comptage n'est pas une contrainte trop importante dans les techniques d'imagerie médicale traditionnelles. En effet, comme indiqué ci-dessus, le collimateur arrête un très grand nombre de rayons gamma et seul un petit nombre d'événements sont effectivement détectés.

Les gamma-caméras sont cependant utilisées également dans deux autres techniques d'imagerie médicale où la limitation du taux de comptage est une contrainte rédhibitoire.

Ces techniques sont les techniques dites de "correction d'atténuation par transmission" et de "PET (Positon Emission Tomography) en coïncidence".

La technique de correction d'atténuation par transmission consiste à tenir compte lors de la formation d'une image médicale de l'atténuation propre du tissu du patient entourant l'organe examiné. Pour connaître cette atténuation, on mesure la transmission des rayonnements X ou gamma vers une gamma-caméra à travers le corps du patient. A cet effet on place le patient entre une source externe très active et la tête de détection de la gamma-caméra. L'activité de la source doit être élevée pour que l'acquisition soit effectuée avec une statistique suffisante dans un temps suffisamment court pour ne pas rallonger la durée de l'examen. Ainsi, lors de la mesure du rayonnement transmis, un nombre élevé d'événements ont lieu dans le cristal scintillateur. Le nombre élevé d'événements par unité de temps accroît aussi la probabilité d'avoir plusieurs événements sensiblement simultanés. Une caméra de type Anger classique se révèle alors inappropriée.

La technique de PET consiste à injecter au patient un élément tel que $F^{18}$ apte à émettre des positons. L'annihilation d'un positon et d'un électron libère deux photons γ émis dans des directions opposées et ayant une énergie de 511 keV. Ce phénomène physique est mis à profit dans la technique d'imagerie PET. Dans cette technique on utilise une gamma-caméra avec au moins deux têtes de détection disposées de part et d'autre du patient. Les têtes de détection utilisées ne sont pas équipées de collimateur. En effet, un traitement électronique des informations, dit traitement de coïncidence, permet de sélectionner parmi les événements ceux qui coïncident temporellement, et de calculer ainsi la trajectoire des photons gamma.

Les têtes de détection sont donc soumises à des flux de rayonnement gamma élevé. Les gamma-caméras classiques de type Anger ont un taux de comptage généralement trop limité pour une telle application.

A titre indicatif, une gamma-caméra de type Anger peut fonctionner normalement avec une détection de $1,5.10^5$ à $2.10^5$ événements par seconde, tandis qu'en imagerie PET il faut au moins 1 à $2.10^6$ événements par seconde pour un fonctionnement normal.

Une autre limitation des gamma-caméras du type Anger, décrites ci-dessus, tient au fait que le calcul du barycentre d'un événement est fixé définitivement par la construction de la tête de détection et notamment par le choix des résistances $RX^-$, $RX^+$, $RY^-$, $RY^+$ pour chaque photomultiplicateur.

Une autre limitation des caméras de type Anger provient du fait que pour éviter des fluctuations statistiques importantes, on doit intégrer le signal des photomultiplicateurs sur un temps assez important, de l'ordre de quatre fois le temps de décroissance de ce signal (constante de temps de décroissance de la lumière dans le cristal = 250 ns). De façon pratique le signal est intégré sur 1 µs. Ce temps d'intégration limite également le taux de comptage.

Les documents (7), (8) et (9) dont les références sont précisées à la fin de la description décrivent des dispositifs à scintillation correspondant sensiblement au préambule de la revendication 1.

La demande de brevet W0-93/15420 décrit un appareil de rassemblement de données de scintillation à utiliser avec une caméra à scintillation et des moyens de traitement de ces données. L'appareil comprend un additionneur pour additionner, alors qu'elles sont encore sous forme analogique, les données provenant de tous les détecteurs, et déterminer si l'on a à faire à une impulsion correspondant réellement à une scintillation. La conversion numérique n'intervient qu'au cas où la scintillation est validée comme étant le résultat d'une intersection d'un photon γ avec le matériau du scintillateur. Le signal validé est ensuite traité normalement pour déterminer une position d'occurrence du choc.

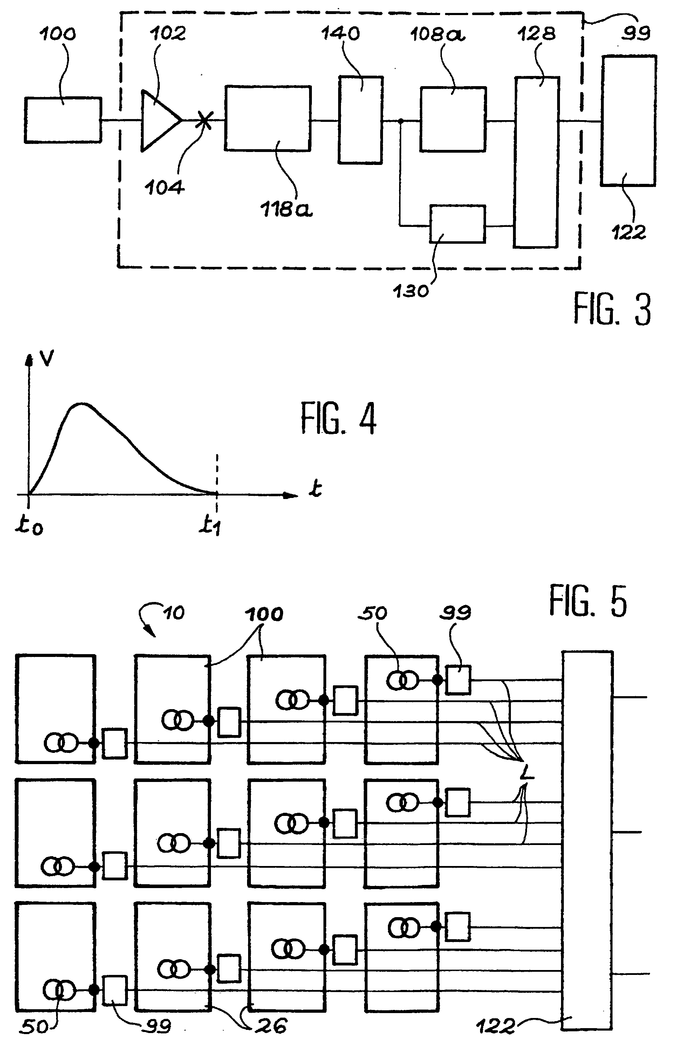

Le brevet EP-A-0 277 391 décrit lui aussi une amélioration apportée à la caméra de type Anger destinée à augmenter la puissance de comptage. Ainsi, dans le mode de réalisation représenté par exemple figure 2 et décrit à partir du haut de la page 7 de ce document, la caméra comporte un cristal scintillateur 10. Le cristal 10 est couplé par l'intermédiaire d'un guide de lumière 30 à la fenêtre d'entrée d'un jeu de P photos détecteurs 50. Après amplification par des amplificateurs 61, le signal est introduit dans des dispositifs de conversion et d'intégration 63 assurant successivement l'échantillonnage des signaux de sortie du circuit 61 et la conversion analogique numérique des échantillons obtenus ainsi que la sommation de ceux-ci. Un dispositif de détection séquencement et stockage, représenté sur la figure 3, reçoit les signaux analogiques en sortie de chacun des amplificateurs 61 et effectue une sommation de l'ensemble de ces signaux. A partir de cette sommation, un seuil minimum est déterminé. La comparaison de la valeur en provenance de chacun des photos détecteurs, et du seuil permet de déterminer dans un circuit 190 si la valeur provenant d'un détecteur sera ou non transmise au moyen de traitements 200. On élimine ainsi P' détecteurs qui ont reçu une illumination insuffisante pour être prise en compte.

Un Article de Mankoff Da et al paru dans la revue Physics in Medicine and Biology, volume 34, n° 4, avril 1989, pages 437 à 456, décrit un détecteur de position bidimensionnelle à taux de comptage élevé pour la tomographie à émission de positrons. L'Article est essentiellement concerné par les différents traitements que l'on peut appliquer à des signaux en provenance de détecteurs d'une gamma-caméra. Le dispositif de détection se trouvant en amont du calculateur est très brièvement décrit dans le paragraphe 2.1 se trouvant page 439 en liaison avec la figure 1 qui se trouve page 440. Le détecteur comprend un cristal couplé à une matrice de photo-multiplicateurs. Les impulsions en provenance de chacun des photos-multiplicateurs sont raccourcies. Les impulsions raccourcies sont pré-amplifiées et alimentent un dispositif comprenant d'une part, un convertisseur analogique-numérique et un additionneur en sorte qu'une intégration desdits signaux numérisés est réalisée.

L'Article examine ensuite les différences de résultat et les taux de comptage que l'on peut obtenir en fonction notamment de la durée desdites impulsions raccourcies.

Exposé de l'invention

La présente invention a pour but de proposer un dispositif de collection et de codage de signaux d'une pluralité de photodétecteurs d'une caméra ne présentant pas les limitations exposées ci-dessus.

Un but est en particulier de proposer un tel dispositif pour des gamma-caméras, autorisant un taux de comptage plus important que celui des caméras de type Anger telles que décrites ci-dessus.

Un but de l'invention est encore de proposer un dispositif permettant de traiter une pluralité d'événements de détection simultanés.

Un but de l'invention est aussi de proposer un dispositif avec lequel il est possible de déterminer le lieu des événements selon différents algorithmes de calcul.

Un but est aussi de proposer un dispositif qui permette un traitement rapide des données fournies par les photomultiplicateurs et qui soit d'un coût de réalisation réduit.

Pour atteindre ces buts, l'invention a plus précisément pour objet un dispositif de collection, de codage numérique et de traitement de signaux d'une pluralité de photodétecteurs d'une caméra. Ce dispositif comporte : une pluralité d'unités de codage numérique, chaque unité de codage numérique de ladite pluralité d'unité de codage étant respectivement associée à un photodétecteur individuel de ladite pluralité de photodétecteurs, et chaque unité de codage comportant dans l'ordre, à partir du photodétecteur associé, un convertisseur analogique-numérique présentant une résolution supérieure ou égale à 7 bits, apte à convertir un signal analogique de détection fourni par le photodétecteur en un signal numérique de détection, une unité de déconvolution, un sommateur numérique pour sommer le signal numérique de détection et fournir un signal somme à une unité de traitement numérique commune reliée individuellement à chacune des unités de codage, et une porte commandée par une unité de pilotage pour diriger vers l'unité de traitement une somme glissante d'échantillons à chaque fois qu'un nombre donné d'échantillons d'une impulsion est sommé, l'unité de pilotage comportant un comparateur de signal pour comparer le signal par rapport à un seuil de bruit, un comparateur d'échantillon pour comparer la valeur d'un échantillon N+1 à la valeur de l'échantillon précédent N pendant que le signal est supérieur audit seuil de bruit, et un compteur pour vérifier que la durée des impulsions détectées correspond à une forme physique standard déterminée.

On entend par unité de codage numérique un ensemble fonctionnel, sous la forme d'un circuit électronique capable de mettre en forme le signal fourni par le photodétecteur qui y est relié, de réaliser la somme glissante du signal, et enfin de fournir des données numériques représentatives de ce signal. Les données numériques sont ensuite transmises à l'unité de traitement.

Le dispositif de l'invention permet de réaliser un codage "flash" des impulsions avec un faible nombre de bits et avec une déconvolution en ligne. La porte, commandée par l'unité de pilotage, permet de diriger vers l'unité de traitement une somme glissante d'échantillons d'une impulsion, déclenchée par la reconnaissance de la forme de l'impulsion.

A partir des données numériques fournies par l'ensemble des unités de codage numérique, l'unité de traitement numérique est capable de calculer la position et l'énergie des événements, c'est-à-dire des interactions d'un rayonnement γ et la matière du scintillateur.

L'unité de traitement peut être conçue aussi pour former une image, dite image-gamma, à partir des positions et des énergies calculées des événements.

Grâce au dispositif de l'invention, plusieurs événements ayant lieu simultanément dans le scintillateur de la caméra peuvent être traités simultanément. En effet, comme le signal analogique de chaque photodétecteur est traité localement par les unités de codage numérique, un mélange et une superposition des signaux analogiques provenant de différents photodétecteurs sont exclus.

Cette caractéristique avantageuse permet d'exposer la tête de détection à des sources plus actives ou permet d'enlever le collimateur. Un taux de comptage élevé est également autorisé par le fait que l'intégration du signal n'est pas collective.

Par ailleurs, un risque d'empilement de deux événements proches dans le temps, en raison du temps d'intégration d'un intégrateur analogique est évité : le codage et l'intégration ont lieu en permanence.

De plus, en collectant directement un signal numérique provenant de chaque unité de codage, il est possible de-calculer une position de l'événement selon un algorithme au choix programmé dans l'unité de traitement numérique.

Le calcul de position n'est pas fixé définitivement par un réseau de résistances et de câblage comme pour les caméras de type Anger connues.

L'unité de déconvolution prévue dans le dispositif de l'invention permet de séparer des signaux trop proches dans le temps. Cette unité n'est pas décrite en détail ici. Il s'agit d'un équipement dont le fonctionnement en soi est connu. On peut se reporter à ce sujet au document (5) dont la référence est indiquée à la fin de la présente description.

L'invention concerne également un procédé de collection, de codage et de traitement de signaux d'une pluralité de photodétecteurs selon lequel on effectue une conversion analogique-numérique individuelle de chaque signal, de façon à coder chaque impulsion du signal en un certain nombre d'échantillons, une déconvolution, et une somme glissante des échantillons du signal de chaque photodétecteur et on dirige vers une unité de traitement numérique commune un signal numérique correspondant à la somme glissante, procédé caractérisé en ce que :

- préalablement à la sommation des échantillons on effectue une déconvolution et en ce que :

    - préalablement à l'envoi de la somme glissante vers l'unité de traitement commune on effectue
    - une détection du passage par un maximum, du signal numérique provenant d'un photodétecteur,
    - une vérification que la durée des impulsions détectées correspond à une forme physique standard déterminée,

et en ce que ladite somme glissante est envoyée vers l'unité de traitement à chaque fois que l'ensemble des échantillons ou un nombre donné d'échantillons d'une impulsion correspondant à un événement est sommé.

D'autres caractéristiques et avantages de la présente invention ressortiront mieux de la description qui va suivre, en référence aux figures des dessins annexés, donnée à titre purement illustratif et non limitatif;

Brève description des figures

-   La figure 1, déjà décrite, est une coupe schématique d'une tête de détection d'une caméra de type Anger connue.
-   Les figures 2A et 2B, déjà décrites, montrent de façon schématique un dispositif de collection et de codage de signaux provenant de photomultiplicateurs de la tête de détection de la figure 1.
-   La figure 3 est une représentation schématique partielle d'un dispositif de collection et de codage numérique de signaux de photodétecteurs, conforme à un mode de réalisation particulier de l'invention.
-   La figure 4 est un graphique montrant un signal fourni par le photodétecteur, après adaptation par un convertisseur courant-tension.
-   La figure 5 est un schéma de câblage d'une caméra équipée d'un dispositif de collection et de codage numérique conforme à la figure 3,

Description détaillée de modes de réalisation de l'invention

La figure 3 montre une réalisation particulière du dispositif de l'invention.

Elle représente une vue partielle du dispositif, correspondant à un seul photodétecteur.

Dans le mode de réalisation de la figure 3, le photodétecteur est un photomultiplicateur 100 relié à un convertisseur courant-tension 102. En réponse à un événement détecté par le photomultiplicateur, on obtient sur la sortie 104 du convertisseur courant-tension 102 un signal conforme à la figure 4.

La figure 4 est un graphique qui indique en ordonnée l'amplitude du signal fourni par un photomultiplicateur, correspondant à l'impulsion, et en abscisse le temps. L'amplitude du signal et le temps sont indiqués en échelle arbitraire. Sur la figure 4, on indique par $t_0$ l'instant de départ de l'impulsion fournie par le photomultiplicateur et par $t_1$ l'instant où l'impulsion redevient quasiment nulle, après être passée par un maximum.

A titre indicatif, l'intervalle $t_1-t_0$ est de l'ordre d'une microseconde.

Par retour à la figure 3, le signal analogique présent sur la borne de sortie 104 n'est pas dirigé vers un intégrateur analogique mais directement vers un convertisseur analogique-numérique 118a. Le convertisseur analogique-numérique échantillonne chaque impulsion du signal en un certain nombre d'échantillons noté n.

A titre d'exemple, le convertisseur échantillonne chaque impulsion du signal en dix échantillons. Dans un tel cas, pour un signal de 1 µs, le convertisseur analogique-numérique effectue un échantillonnage tous les 100 ns.

Il apparaît ainsi que le convertisseur analogique-numérique 118a est de préférence un convertisseur rapide de type "flash" pouvant fonctionner à une fréquence de l'ordre de 10 à 20 MHz. La résolution du convertisseur est supérieure ou égale à 7 bits. A titre d'exemple, la résolution peut être choisie égale à 8 bits.

Le signal numérique issu du convertisseur analogique-numérique 118a est dirigé vers un sommateur numérique 108a. Le sommateur numérique effectue une somme glissante des échantillons qui lui sont transmis par le convertisseur analogique-numérique. La somme glissante est effectuée sur un nombre donné d'échantillons. Ce nombre prédéterminé, est égal, par exemple, à 10, pour un échantillonnage tous les 100 ns.

La valeur de la somme glissante est dirigée vers une unité de calcul 122 à chaque fois que l'ensemble des échantillons ou un nombre donné d'échantillons d'une impulsion correspondant à un événement est sommé.

Le dispositif de la figure 3 comprend à cet effet une porte 128 commandée par une unité de pilotage 130.

L'unité de pilotage 130, reliée également à la sortie du convertisseur analogique-numérique peut être conçue ou programmée, par exemple, de façon à déterminer l'instant de passage par un maximum du signal numérique disponible à la sortie du convertisseur analogique-numérique 118a, et déclencher le stockage dans l'unité de calcul 122, de l'intégrale numérique du signal fourni par le sommateur 108a, un certain nombre de pas d'horloge plus tard. Le passage par un maximum du signal numérique permet en effet de détecter la présence d'une impulsion correspondant à un événement.

L'unité de pilotage comporte :

-   un comparateur de signal pour comparer le signal par rapport à un seuil de bruit,
-   un comparateur d'échantillon pour comparer la valeur d'un échantillon N+1 à la valeur de l'échantillon N pendant que le signal est supérieur audit seuil de bruit,
-   un compteur pour vérifier que la durée des impulsions détectées correspond à une forme physique standard déterminée.

Cette solution a l'avantage d'être très simple. Elle est toutefois assez imprécise lorsque l'amplitude des impulsions fournies par le photomultiplicateur est petite.

L'unité de pilotage peut aussi être commune à tous les canaux du dispositif de collection. Selon cette variante, elle peut être conçue ou programmée de façon à déterminer l'instant de passage *par un maximum* du signal somme de tous les photomultiplicateurs (énergie) et déclencher le stockage des intégrales numériques de tous les photomultiplicateurs un certain nombre de pas d'horloge plus tard.

Cette solution permet un déclenchement de lecture de la somme particulièrement précis. Elle est adaptée notamment dans des applications d'imagerie de type PET en coïncidence.

Selon une autre variante, l'unité 130 peut être conçue et programmée pour déterminer le passage par un maximum d'un signal de grande amplitude provenant d'un photomultiplicateur et de déclencher le transfert de l'intégrale numérique du signal de ce photomultiplicateur et des photomultiplicateurs voisins ayant des signaux de plus faible amplitude. Cette solution est également précise mais impose la comparaison entre eux des signaux des différents photomultiplicateurs.

Selon un autre perfectionnement avantageux, le dispositif de la figure 7 est équipé d'une unité de déconvolution 140 disposée entre le convertisseur analogique-numérique 118a et l'intégrateur numérique 108a.

Cette unité de déconvolution 140 permet de séparer les signaux correspondant à deux impulsions fournies par un même photomultiplicateur consécutivement à deux événements proches dans le temps et proches dans l'espace (dans le scintillateur).

L'unité 140 permet de traiter ainsi séparément des signaux empilés. On peut se reporter à ce sujet aux documents (5) et (6). La déconvolution est réalisée à partir d'une fonction de transfert inverse de l'ensemble formé par le cristal, le photomultiplicateur et le convertisseur courant-tension 102.

Le dispositif de la figure 3 permet, comme indiqué ci-dessus, de traiter séparément des événements successifs dans un temps très bref et situés sensiblement au même endroit sur le cristal scintillateur.

Par ailleurs, le codage et la sommation ont lieu continûment et il n'est pas nécessaire de prévoir un séquencement de l'intégration du signal analogique.

Enfin, pour une précision égale, il est possible d'utiliser un convertisseur analogique-numérique 118a dont la résolution est $\sqrt{n}$ fois moins grande que celle d'un convertisseur analogique-numérique qui serait placé en aval de l'intégrateur, où n est le nombre d'échantillons utilisés pour coder une impulsion du signal.

En particulier, si une résolution de 10 bits suffit pour coder numériquement une intégrale analogique fournie par un intégrateur analogique, une résolution de 8 bits suffit pour coder directement l'impulsion du photomultiplicateur à la sortie du préamplificateur 102 dans le cas de la figure 3. Ceci est le cas lorsque n est égal environ à 10.

Cet aspect est particulièrement avantageux. En effet, les codeurs avec une résolution de 8 bits sont standardisés et existent en bibliothèque d'ASIC. Il est ainsi possible de réaliser facilement et pour un coût réduit, l'ensemble du dispositif de collection et de codage numérique, sous la forme d'un circuit intégré.

La figure 5 montré le câblage d'une tête de détection 10 d'une caméra équipée du dispositif de collection et de codage conforme à l'invention. La tête de détection 10 comporte une pluralité de photomultiplicateurs 100 dont la sortie est respectivement symbolisée comme une source de courant 50. La sortie de chaque photomultiplicateur 100 est reliée à une unité 99 de collection et de codage numérique pour traiter individuellement le signal de chaque photomultiplicateur.

Chaque unité 99 peut être considérée comme un canal du dispositif de collection et de codage numérique de l'invention. Chaque unité 99 est construite de façon identique, par exemple, selon le schéma de la figure 3, déjà décrit, ou selon le schéma de la figure 7 décrit plus loin. Les unités de collection et de codage sont individuellement reliées à l'unité de calcul numérique 122 par des liaisons électriques L. Cette unité de calcul 122 est programmée, par exemple, par logiciel, afin de déterminer la position, les coordonnées et l'énergie d'un événement détecté sur la tête de détection. L'unité de calcul peut aussi être programmée pour établir une image vue par la caméra à partir des positions et énergies des événements.

## DOCUMENTS CITES DANS LA DESCRIPTION

*(1)*
    US-A-3 011 057
*(2)*
    FR-A-2 669 439
*(3)*
    US-A-4 900 931
*(4)*
    US-A-4 672 542
*(5)*
    FR-A-2 665 770 ($\equiv$ EP-A-0 470 909)
*(6)*
    US-A-5 276 615
*(7)*
    Mankoff D A et al : « The High Count Rate Performance of a Two-Dimensionally Position-sensitive Detector For Positron Emission Tomography », Physics in Medicine and Biology, vol. 34, no.4, avril 1989, pages 437-456, XP000005971
*(8)*
    WO-A-93 15420
*(9)*
    EP-A-0 277 391

## Revendications

**1.** Dispositif de collection, de codage numérique et de traitement de signaux d'une pluralité de photodétecteurs (100) d'une caméra, comportant une pluralité d'unités de codage numérique (99), chaque unité de codage numérique de ladite pluralité d'unités de codage étant respectivement associée à un photodétecteur individuel (100) de ladite pluralité de photodétecteurs, et une unité de traitement commune (122) reliée individuellement à chacune des unités de codage, chaque unité de codage comportant dans l'ordre, à partir du photodétecteur associé, un convertisseur analogique-numérique (118a) apte à convertir un signal analogique de détection fourni par le photodétecteur en un signal numérique de détection, un sommateur numérique (108a) pour sommer le signal numérique de détection et fournir un signal somme à l'unité de traitement numérique commune (122), **caractérisé en ce que** le convertisseur analogique-numérique présente une résolution supérieure ou égale à 7 bits, et **en ce que** le dispositif comporte en outre une unité de déconvolution (140), une porte (128) commandée par une unité de pilotage (130) pour diriger vers l'unité de traitement une somme glissante d'échantillons à chaque fois qu'un nombre donné d'échantillons d'une impulsion est sommé, l'unité de pilotage (130) comportant un comparateur de signal pour comparer le signal par rapport à un seuil de bruit, un comparateur d'échantillon pour comparer la valeur d'un échantillon N+1 à la valeur de l'échantillon précédent N pendant que le signal est supérieur audit seuil de bruit, et un compteur pour vérifier que la durée des impulsions détectées correspond à une forme physique standard déterminée.

**2.** Dispositif selon la revendication 1, **caractérisé en ce que** le convertisseur analogique-numérique (118a) présente une résolution de 8 bits.

**3.** Dispositif selon la revendication 1, **caractérisé en ce que** les photodétecteurs (100) sont des photomultiplicateurs.

**4.** Dispositif selon la revendication 1, **caractérisé en ce que** la caméra est une gamma-caméra.

**5.** Dispositif selon la revendication 1 comprenant une unique unité de pilotage (130) commune à toutes les unités de codage numérique (99).

**6.** Procédé de collection, de codage et de traitement de signaux, comportant des impulsions provenant d'une pluralité de photodétecteurs (100) selon lequel on effectue une conversion analogique-numérique individuelle de chaque signal, de façon à coder chaque impulsion du signal en un certain nombre d'échantillons, et une somme glissante des échantillons du signal de chaque photodétecteur et on dirige vers une unité de traitement numérique commune (122) un signal numérique correspondant à la somme glissante, procédé **caractérisé en ce que** :

- préalablement à la sommation des échantillons on effectue une déconvolution et **en ce que** :

- préalablement à l'envoi de la somme glissante vers l'unité de traitement commune (122) on effectue

- une détection du passage par un maximum, du signal numérique provenant d'un photodétecteur,

- une détection du passage par un maximum, du signal numérique provenant d'un photodétecteur,

- une vérification que la durée des impulsions détectées correspond à une forme physique standard déterminée,

- et **en ce que** ladite somme glissante est envoyée vers l'unité de traitement (122) à chaque fois que l'ensemble des échantillons ou un nombre donné d'échantillons d'une impulsion correspondant à un événement est sommé.

**7.** Procédé de collection selon la revendication 6 dans lequel pour détecter les passages par un maximum du signal numérique on sélectionne des valeurs d'échantillons supérieures à un seuil de bruit et on compare la valeur de chaque échantillon (N+1) à la valeur de l'échantillon précédent (N).

**Patentansprüche**

**1.** Vorrichtung zum Sammeln, digitalen Codieren und Verarbeiten von Signalen einer Vielzahl von Photodetektoren (100) einer Kamera, eine Vielzahl digitaler Codiereinheiten (99) umfassend, wobei jede digitale Codiereinheit der genannten Vielzahl von Codiereinheiten jeweils einem individuellen Photodetektor (100) der genannten Vielzahl von Photodetektoren zugeordnet ist und eine gemeinsame Verarbeitungseinheit (122) mit jeder der Codiereinheiten verbunden ist, und jede der Codiereinheiten, ausgehend vom dem zugeordneten Photodetektor, in Reihenfolge einen Analog-Digital-Wandler (118a), fähig ein durch den Photodetektor empfangenes analoges Detektionssignal in ein digitales Detektionssignal umzuwandeln, sowie einen digitalen Summierer (108a) umfasst, fähig das digitale Detektionssignal zu summieren und der gemeinsamen Verarbeitungseinheit (122) ein Summensignal zu liefern,
**dadurch gekennzeichnet,**
**dass** der Analog-Digital-Wandler eine Auflösung gleich oder höher als 7 Bit aufweist, und dadurch, dass die Vorrichtung außerdem eine Entfaltungseinheit (140) umfasst, sowie ein Port (128), gesteuert durch eine Steuereinheit (130), um der Verarbeitungseinheit jedes Mal eine Gleitsumme von Abtastwerten zuzuführen, wenn eine bestimmte Anzahl Abtastwerte eines Impulses summiert ist, wobei die Steuereinheit (130) einen Signalkomparator, fähig das Signal in Bezug auf eine Geräuschschwelle zu vergleichen, einen Abtastwert-Komparator, fähig den Abtastwert N+1 mit dem vorhergehenden Abtastwert N zu vergleichen, während das Signal höher ist als die genannte Geräuschschwelle, sowie einen Zähler umfasst, um zu verifizieren, dass die Dauer der detektierten Impulse einer bestimmten physischen Standardform entspricht.

2. Vorrichtung nach Anspruch 1, **dadurch gekennzeichnet, dass** der Analog-Digitalwandler (118a) eine 8-Bit-Auflösung hat.

3. Vorrichtung nach Anspruch 1, **dadurch gekennzeichnet, dass** die Photodetektoren (100) Photo- bzw. Elektronenvervielfacher sind.

4. Vorrichtung nach Anspruch 1, **dadurch gekennzeichnet, dass** die Kamera eine Gamma-Kamera ist.

5. Vorrichtung nach Anspruch 1 mit einer einzigen, allen digitalen Codiereinheiten (99) gemeinsamen Steuereinheit (130).

6. Verfahren zum Sammeln, digitalen Codieren und Verarbeiten von Signalen, Impulse umfassend, die von einer Vielzahl von Photodetektoren (100) stammen, nach dem man eine individuelle Analog-Digital-Umwandlung jedes Signals vornimmt, um jeden Impuls des Signals in einer bestimmten Anzahl von Abtastwerten zu codieren, eine Gleitsumme der Abtastwerte des Signals jedes Photodetektors realisiert und einer gemeinsamen digitalen Verarbeitungseinheit (122) ein der Gleitsumme entsprechendes digitales Signal zuführt,
wobei dieses Verfahren **dadurch gekennzeichnet ist:**

- **dass** man vor der Summierung eine Entfaltung durchführt, und dadurch,
- **dass** man, bevor man der gemeinsamen Verarbeitungseinheit (122) die Gleitsumme zuführt, folgende Operationen ausführt:

- eine Detektion des Durchlaufens eines Maximums des von einem Photodetektor stammenden digitalen Signals,
- eine Detektion des Durchlaufens eines Maximums des von einem Photodetektor stammenden digitalen Signals,
- eine Verifizierung, dass die Dauer der detektierten Impulse einer bestimmten physischen Standardform entspricht,
- und dadurch, dass die Gleitsumme jedes Mal einer Verarbeitungseinheit (122) zugeführt wird, wenn die Gesamtheit der Abtastwerte oder eine bestimmte Anzahl von Abtästwerten eines einem Ereignis entsprechenden Impulses summiert ist.

7. Sammelverfahren nach Anspruch 6, bei dem man zum Detektieren des Durchlaufens eines Maximums des digitalen Signals Abtastwerte selektiert, die größer sind als ein Geräuschschwellenwert, und man den Wert jedes Abtastwerts (N+1) mit dem Wert des vorangehenden Abtastwerts (N) vergleicht.

**Claims**

1. Device for the collection, digital encoding and processing of signals from a plurality of photodetectors (100) of a camera, comprising a plurality of digital encoding units (6, 99), each digital encoding unit of said plurality of digital encoding units being respectively associated with an individual photodetector (100) of said plurality of photodetectors, and a common processing unit (122) individually connected to each of the encoding units, each encoding unit having in order, starting from the associated photodetector, an analog-digital converter (118a) able to convert an analog detection signal supplied by the photodetector into a digital detection signal, a digital summator (108a) for summating the digital detection signal and for supplying a sum signal to the common digital processing unit (122), **characterized in that** the analog-digital converter has a resolution equal to or greater than 7 bits and **in that** the device also has a deconvolution unit (140), a gate (128) controlled by a control unit (130) for directing to the processing unit a sliding sum of samples on each occasion that a given number of samples of a pulse is summated, the control unit (130) incorporating a signal comparator for comparing the signal with a noise threshold, a sample comparator for comparing the value of a signal N+1 with the value of the preceding sample N during which the signal exceeds said noise threshold, and a counter for verifying that the duration of the detected pulses corresponds to a given standard physical form.

2. Device according to claim 1, **characterized in that** the analog-digital converter (118a) has a resolution of 8 bits.

3. Device according to claim 1, **characterized in that** the photodetectors (100) are photomultipliers.

4. Device according to claim 1, **characterized in that** the camera is a gamma camera.

5. Device according to claim 1 comprising a single control unit (130) common to all the digital encoding units (99).

6. Process for collecting, encoding and processing signals from a plurality of photodetectors (100) according to which there is an individual analog-digital conversion of each signal, so as to encode each pulse of the signal in a certain number of samples, a deconvolution and a sliding sum of the samples of the signal of each photodetector and to a common digital processing unit (122) is directed a digital signal corresponding to the sliding sum, **characterized in that** prior to the summation of the samples a deconvolution takes place and **in that** prior to the forwarding of the sliding sum to the common processing unit (122) a detection of the passage through a maximum takes place with respect to the digital signal from a photodetector, a check is made to establish that the duration of the detected pulses corresponds to the given, standard physical form and **in that** said sliding sum is forwarded to the processing unit (122) on each occasion that all the samples or a given number of samples of a pulse corresponding to an event is summated.

7. Collection process according to claim 6 in which, for detecting passages through a maximum of the digital signal, a selection takes place of the values of samples above a noise threshold and the value of each sample N+1 is compared with the value of the preceding sample N.

FIG. 1

FIG. 2B

FIG. 2A

EP 0 931 271 B1

100

102    140    108a    128    99

104

118a

130

FIG. 3

V

t₀    t₁    t

FIG. 4

FIG. 5

10    100    50    99

L

50    99    26    122